# EUROPEAN PATENT APPLICATION

(11) **EP 1 791 305 A1**
(43) Date of publication of application: **30.05.2007**
(21) Application number: 05292531.0
(22) Date of filing: 25.11.2005
(51) Int. Cl.: H04L 12/56, H04L 29/06

(54) **Storing and processing a data unit in a network device**

(71) Applicant: Alcatel Lucent, 75008 Paris (FR)
(72) Inventor: Wehren, Thomas, 15732 Eichwalde (DE)
(74) Representative: Schäfer, Wolfgang

(57) **Abstract**

To provide a possibility for increasing the speed of operation of a data unit according to forwarding and/or processing of data units by a network device (2) that is connected to a communications network (1b) and wherein at least one management information is assigned to each data unit and wherein the received data unit is stored in a first memory area (8), it is suggested that the method comprises the steps of generating a data frame manage element comprising the management information of the data unit, assigning the data unit to the data frame manage element, and storing the data frame manage element in a second memory area (9).

## Description

The present invention relates to a method for storing and processing a data unit in a network device, wherein the network device is connected to a communications network, at least one management information is assigned to the data unit, and the method comprises the steps of
- transmitting the data unit to the network device;
- receiving the data unit by the network device;
- storing the data unit in a first memory area.
   The invention also relates to a communications network comprising a network device and means for transmitting a data unit to the network device, wherein the network device comprises a first memory area and means for receiving the data unit and storing the data unit in the first memory area.
   The invention, furthermore, relates to a network device that can be connected to a communications network, wherein the network device comprises a first memory area and means for receiving a data unit and storing the data unit in the first memory area.
   Finally, the invention relates to a computer program adapted to be run a data processing unit, in particular on a network device.
   A communications network typically consists of one or more network devices and one or more transmission elements. A network device can be e.g. each personal computer that is connected to the internet. A network device can also be realised as a mobile telecommunication device which is connected and part of a wireless network. In the broadest sense each physically existing device that is part of a communications network can be denoted as a network device. In particular, network devices are e.g. bridges, routers and gateways.
   A transmission element consists at least of the physical medium and the associated logic that is needed for data transmission. The so-called ethernet is an example of a transmission element.
   A communications network can be designed as a cellular network. Well-known cellular networks are, e.g., the GSM (Global System for Mobile Communications) network and the UMTS (Universal Mobile Telecommunications System) network.
   Cellular networks enable a mobile network device, a so-called user equipment, to communicate with another user equipment or with a stationary network device.
   Typically, within a communications network data are transmitted from a first network device, the sender, to a second network device, the receiver, via several other network devices and/or transmission elements. In particular, whenever different transmission elements are connected, the transmitted data have to be transformed by at least one network device between the transmission elements, because of the different physical conditions and/or different protocols used for data transmission.
   Each network device that is part of the transmission path from a sender to a receiver forwards and/or processes data that have to be transmitted. Usually, the network device first stores the received and maybe processed data in a memory area, until the data have to be forwarded.
   According to modern transmission protocols, data are transmitted as so-called data packets. A data packet is also referred to as a data unit. The sender splits the information that has to be transmitted into a number of data units which are transmitted over the network to the receiver. The receiver reassembles the received data units to obtain the original information.
   Each network device within the transmission path has to ensure, that the data units can be reassembled. To achieve this it is known to store the received data units by using a specialised data type, the so-called queue. This allows to preserve the order in which the data units are received and have to be forwarded.
   Usually, a management information is attached to each data unit, at least when it is stored in a forwarding or processing network device. A management information comprises e.g. a size of the data unit, a time stamp and an index to the storage address of the next data unit within the sequence of data units.
   Before forwarding a data unit, several decisions have to be made, e.g. which data unit has to be forwarded next or whether a data unit has to be deleted due to exceeding a predefined lifetime. Therefore, management information as the size of the data unit and the time of reception have to be taken into account. This requires a frequent access to the management information related to the data unit.
   It is an object of the present invention to provide a possibility for increasing the speed of operation according to forwarding and/or processing of a data unit.
   This object is solved by a method of the above-mentioned kind characterized in that the method comprises the steps of
- generating a data frame manage element comprising the management information of the data unit;
- assigning the data unit to the data frame manage element; and
- storing the data frame manage element in a second memory area.

According to the present invention, a data frame manage element is generated and stored in a second memory area. The data frame manage element comprises the management information. Since the second memory area is separate from the first management area, a faster access of the management information i.e. the data frame manage element, is possible. This allows e.g. a parallel operation mode in which a data frame manage element is read from the second memory area, while the data unit is accessed from the first memory area. It further allows to use standard hardware techniques like cache memories to cache data frame manage element for further access.

Advantageously, the second memory area allows a faster access than the first memory area. Frequently, the data unit is of a larger size than the corresponding management information, i.e. the data frame manage element. Thus, the second memory area on the one hand can be of much less capacity, but on the other hand can offer a much higher speed of access. This again increases the speed of operation of the network device.

According to a preferred embodiment, several data units are transmitted in the payload of at least one data frame to the network device via a transmission element and the method comprising the steps of receiving the data frame by the network device, extracting the data units, and assigning at least two data units to the same data frame manage element. This reduces the amount of storage space that is used for storing the management information, since two or more data units share the same management information by being assigned to the same data frame manage element. Further on, it reduces the time of reading the data frame manage element, since by reading one data frame manage element the management information of more than one data unit can be accessed.

In another preferred embodiment, the data frame manage element is assigned to a queue manage element comprising at least one data frame manage element, wherein the data frame manage element is assigned to a queue of data units.

Typically, data units that have to be transmitted to the same receiving network device, e.g. a user equipment, and that have to be transmitted via the same data channel, are collected within a queue. A queue is a data type for data collection in which only the first added data unit may be accessed. The queue can also be designed as a so-called priority queue. A priority queue is an abstract data type for data collection, e.g. for collecting data units, that efficiently supports finding the data unit with the highest priority across a series of operations, attached to this data type. Designing the queue as a priority queue is particularly advantageous, whenever a priority is assigned to the data units.

According to this embodiment, exactly one queue manage element is assigned to each queue of data units, e.g. to each priority queue. Since the management information of all data units that are received within one payload are stored within the same queue, and all data units that are received within the same payload are assigned to the same data frame manage element, it is possible to manage the queue itself and the data units that are stored in the queue by accessing the information of each data frame manage element that is assigned to a queue manage element. Further on, this allows to hold all data frame manage elements that are assigned to a currently processed queue available for fast access, e.g. by means of a so-called cache.

In an advantageous further development of the method, for each data frame received by the network device exactly one data frame manage element is generated and the data frame manage element is assigned to all data units transmitted within the payload of the received data frame.

For data transmission in communication networks data units that share similar characteristics are transmitted within the payload of the same data frame. Data units that differ according to these characteristics are transmitted in different data frames. Such a characteristic could be, e.g., the user equipment that should receive the data units finally and/or the size of the data units. If this characteristic refers to a management information, storage space can be saved, if the management information that is shared by several data units is only stored once within the data frame manage element.

Particularly, the data frame manage element comprises
- the length of each data unit the data frame manage element is assigned to;
- the number of data units the data frame manage element is assigned to;
- the address of the first data unit in the payload of the data frame, wherein the address enables to access the first data unit after being stored in the first memory area;
- a lifetime information; and/or
- the total number of data units the data frame manage element is assigned to.

This information contributes advantageously to increase the speed of operation and/or to reduce the needed storage space. In particular, a combination of two or more of this information can be benefiting. Knowing the address of the first data unit and the length of each data unit, it is possible to directly access each data unit stored in the first memory area and assigned to the current data frame manage element. Knowing the number of data units that are assigned to the data frame manage element, the last data unit assigned to the data frame manage element is directly accessible. Frequently, a lifetime information is attached to a data unit. This allows e.g. to delete a data unit, when its lifetime is exceeded and thus prevents from processing data units that are e.g. out of date or cannot be transmitted to the user equipment, because of an operational fault.

According to a preferred embodiment, the lifetime information is stored as the sum of a numerical representation of a current time and a numerical representation of a maximum lifetime. Generally, to decide whether a data unit has to be deleted, the lifetime information is checked in predefined time intervals. If the lifetime information is just a maximum lifetime, the time of receiving the data unit must also be stored to compute, when the data unit has to be deleted. According to this preferred embodiment, the lifetime information is stored, such that it describes a point in time. This allows to simply compare a current time with the lifetime information for deciding, whether the data unit has to be deleted.

Advantageously, the queue is organised as a priority queue.

According to a preferred embodiment, the data units stored in the first memory element are organized as a ring buffer. A ring buffer allows to store data in a way, that, if the storage space of the ring buffer would exceed because of storing to much data units, newly added data units would be stored anyhow, but would override the oldest data units within the ring buffer. This allows a very fast access and a predictable behaviour of the queue.

According to a preferred further embodiment, the method comprises the steps of
- checking for each data frame manage element that is stored in the second memory area, whether at least one data unit the data frame manage element is assigned to overlaps with a data unit that is already stored within the same queue; and
- if an overlap occurs, declaring the data frame manage element that was previously stored and that is assigned to the data unit already stored, as invalid.

This allows not to check for each data unit that has to be stored in the first memory area, whether this data unit overrides a previously stored data unit, but to only check once for all data units a data frame manage element is assigned to, whether anyone of these data units overlaps with a previously stored data unit. To perform this, it has to be checked, whether the last data unit within the payload of the received data frame will be stored in a storage location of the ring buffer that is already assigned to a data unit of another data frame manage element. If an overlap is detected, the whole data frame manage element that is assigned to this previously stored data unit will be declared as invalid. This means, that all other data units the data frame manage element is also assigned to are also declared as invalid. This, again, increases the speed of operation of the network device.

Advantageously, the data frame manage element comprises a validity information. The validity information is set to invalid, if the data frame manage element is declared as invalid. Thus, before processing a number of data units, it can be checked, whether these data units are still valid. Since all data units the data frame manage element is assigned to share the same validity information, only one check is enough for determining, whether the whole set of data units are valid.

The validity information can also be set to invalid, when the lifetime of the data units the data frame manage element is assigned to has exceeded.

This centralised validity information again allows to increase the speed of operation for processing the data units and reduces the storage space needed for the storage of the management information.

Preferably, according to a predefined time-interval it is checked, whether the validity information of the data frame is set to invalid and the data frame manage element is removed from the set of data frame manage element, if the data frame is set to invalid. Thus, for deciding, whether a data unit that has to be processed is valid, no access to the first memory area is necessary. Instead, the whole validity information is stored in the second memory area and managed through the data frame manage element.

According to a preferred further embodiment, the network device causes the data units to be transmitted to another network device and the data frame manage element and/or the set of data frame manage element comprises an offset indicating the number of data units that are already transmitted.

If the transmission of data from the network device to another network device, e.g. a user equipment, is interrupted, it has to be recorded which data units are already transmitted or which data units are still not transmitted. Storing this information within the data frame manage element or within the set of data frame manage element allows a fast access. This can result in a significant increase of the speed of operation, since this offset has to be read and updated, whenever a data unit is transmitted, a set of data units is transmitted, and/or a predefined amount of time has passed.

The object of the present invention is also solved by a communications network as mentioned above according to any one of the claims 13 to 15.

Furthermore, the object of the present invention is solved by a network device as mentioned above according to any one of the claims 16 and 17.

Finally, the object of the present invention is solved by a computer program as mentioned above according to claim 18 or claim 19.

The features and advantages of the present invention are explained in more detail below with reference to the accompanying drawings.
- Fig. 1: shows a communications network in a first embodiment;
- fig. 2: shows a communications network according to a second embodiment;
- fig. 3: shows a schematic view of some network devices that are part of a UMTS network;
- fig. 4: shows an example of the layout of a received data frame;
- fig. 5: shows an example of how data units transmitted via different data frames are assigned to different priority queues;
- fig. 6a - 6f: show a more detailed view on the data movements that can be performed to implement the inventive method;
- fig. 7: an example of the interrelations between the components shown in fig. 6a - 6f for implementing the invention.

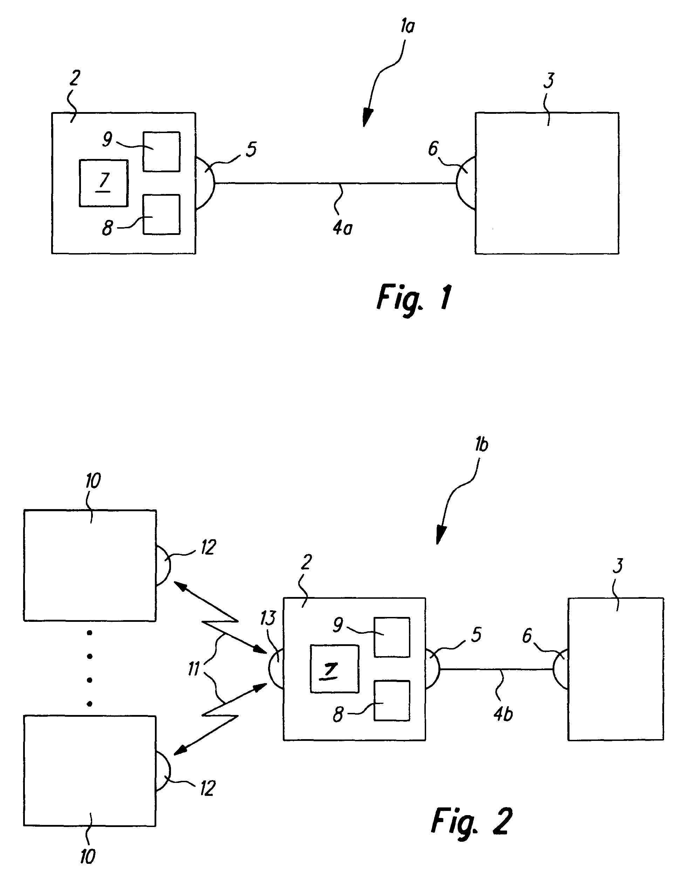

Fig. 1 shows a communications network 1a that comprises a network device 2 and a sender 3. The network device 2 and the sender 3 are enabled for data transmission via a transmission element 4a. For connecting to the transmission element 4a the network device 2 comprises a network adaptor 5 and the sender 3 comprises a network adaptor 6. The transmission element 4a could be e.g. a physical representation of the ethernet. The network adaptors 5, 6 could be realised as a network card.

The network device further comprises a processor 7, a first memory area 8 and a second memory area 9. The first memory area 8 and the second memory area 9 can be realised as separate memory elements that can be accessed from the processor 7. In particular, the second memory area 9 can be realized as a smaller but faster accessible memory element than the first memory area 8. The network device 2 could be a personal computer, a router, a gateway, or a handheld computer. The sender 3 can also be designed as a personal computer, a router, a gateway, a bridge, a handheld or a telecommunication device. The transmission element 4a can also describe the whole internet, which would mean that the network adaptors 5, 6 comprise both, the network card and the software that is needed for data transmission.

Fig. 2 shows a communications network 1b according to a second embodiment. In addition to the communications network 1a as shown in fig. 1, the communications network 1b comprises several user equipments 10. Each user equipment 10 can be realised as a mobile telecommunications system. The user equipment 10 could also be a personal computer or a handheld. According to the communications network 1b as exemplarily shown in fig. 2, the user equipment 10 communicates with the network device 2 via a radio link 11. To access the radio link, the user equipment 10 comprises an air interface 12 and the network device 2 comprises an air interface 13. The transmission element 4b is designed as a terrestrial network unit.

The communications network 1b realises a cellular network. This could be e.g. a GPRS-network or a UMTS-network. In a UMTS-network, the sender 3 can be an RNC (Radio Network Controller). The interfaces 5, 6 can be designed as so-called lub-interfaces which are the interfaces to the so-called UTRAN (UMTS Terrestrial Radio Access Network), wherein the UTRAN is the radio network part of the UMTS-network. The network device could be realised as a so-called Node B.

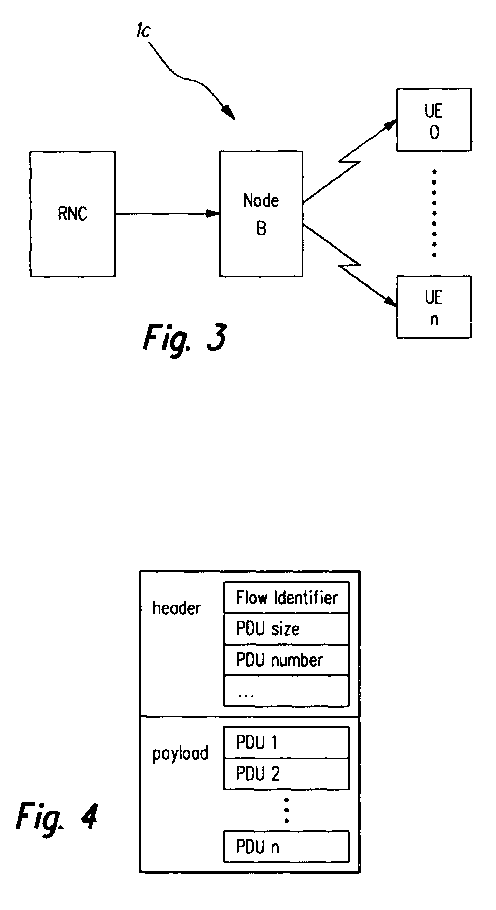

Fig. 3 schematically shows some network devices that are part of an UMTS network 1c. The UMTS network 1c comprises an RNC and a Node B. The RNC sends data units to the Node B in the payload of a data frame. The data units are then stored in the Node B within one or more priority queues until they are forwarded to the appropriate user equipment UEO to UEn shown in fig. 3.

According to fig. 2 and fig. 3, the present invention could be used to realise a priority-queue-system for a high speed downlink packet access (HSDPA) for data transmission with variable data rates to the user equipment. Therefore, the data stream that has to be sent to the user equipment UEO, UEn is divided into separate data units. Such a data unit can also be called a protocol data unit. Typically, a size of a data unit ranges from 1 to 5000 bits.

When the data units are received by the user equipment 10 or UEO to UEn, respectively, the data units will be reassembled to rebuild the original data stream. During their way through the communications network 1a, 1b, 1c the data units of a data stream are grouped differently, depending on the path that is available for data transmission and depending on the network devices 2 or RNCs and Node Bs that are involved in the data transmission. In order not to give each data unit a header comprising management information as size and routing information, similar consecutive data units of a data stream are put together into a payload of the same data frame by the RNC. Each data frame is provided with a header that holds the management information for all data units.

Fig. 4 shows the structure of a data frame that is transmitted from the RNC to the Node B. The data frame is separated in the header and the payload. In the payload several packet data units PDU 1, PDU 2, ... PDU n are stored and transmitted to the Node B. The header comprises a flow identifier. The term data flow is used to denote data transfer of packets which have the same source and target, i.e. the same source and UE. Data flows define unidirectional data transmissions between a given sender and a given receiver. This can be used to assign the data flow to the sender and the receiver, when the e.g. the target address of the receiver changes, e.g. due to a movement of the UE. This identification information is referred to as flow identifier, which can be constructed in many different ways known in the art.

The data frame header comprises information according to the size of the data units or PDUs, the number of the data units or PDUs that are transmitted within the data frame and routing information as the flow identifier which defines the priority queue in the receiving Node B. If the data frame is received by the network device 2 or the Node B, the data units will be extracted out of the data frame payload and buffered into the priority queue that is associated to the data stream until the data units will be forwarded to the user equipment 10 or until a maximum defined lifetime has elapsed.

The data frame shown in fig. 4 is transmitted from the sender 3 or the RNC, respectively, to the network device 2 or the Node B, respectively. According to UMTS, data units can be put in a data frame according to a so-called HS-DSCH (High Speed-Downlink Shared Channel) which is one of several logical channels, the terrestrial network unit 4b of a UMTS cellular network is subdivided into.

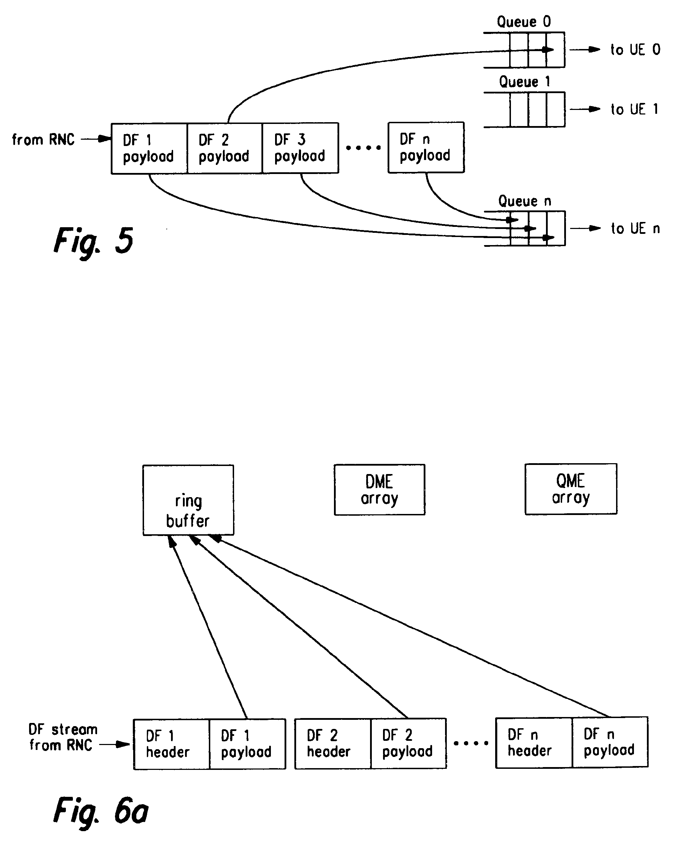

Fig. 5 shows an example of how the stream of data frames DF 1, DF 2, DF 3 to DF n that are transmitted from the RNC to the Node B are attached to the appropriate priority queues that are realized in the Node B. The priority queues in fig. 5 are denoted as Queue 0, Queue 1, to Queue n. Each of these priority queues is assigned to a user equipment UE 0, UE 1, to UE n. As is shown in fig. 5, the payload of the data frame DF 1 is stored in Queue n. So are the payloads of the data frames DF 3 and DF n. The payload of the data frame DF 2 is stored in Queue 0. Since each priority queue is assigned to a specific user equipment, this allows to assign the data units that are sent within the payload of one data frame to be assigned to the appropriate user equipment.

The different types of information transmitted within a data frame to the network device 2 or the Node B are processed differently. This is schematically shown in the figures 6a to 6f. Each data frame within the stream of data frames that are transmitted from the RNC to the Node B is shown subdivided into two parts, the first part representing the header and the second part representing the payload.

As shown in fig. 6a, the data units within the payload of each data frame DF 1, DF 2, ..., DF n are stored in the first memory element 8, which is realised as a ring buffer. The address within the ring buffer at which the first data unit from the payload of the currently processed data frame is stored defines the start address of the whole sequence of data units from the current data frame.

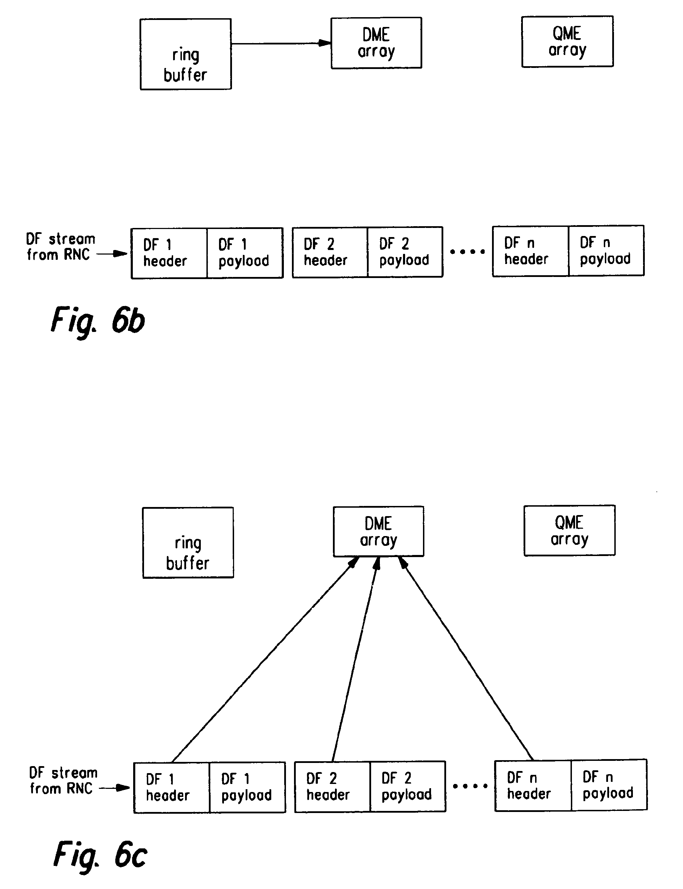

As shown in fig. 6b, this start address is stored in the ring buffer within the data frame manage element DME that is assigned to the current data frame. This is done for the payload of each data frame, accordingly.

Also the size of the PDUs that are transmitted within the payload of the appropriate data frame DF 1, DF 2, ..., or DF n, is stored in the appropriate data frame manage element DME. This is shown in fig. 6c.

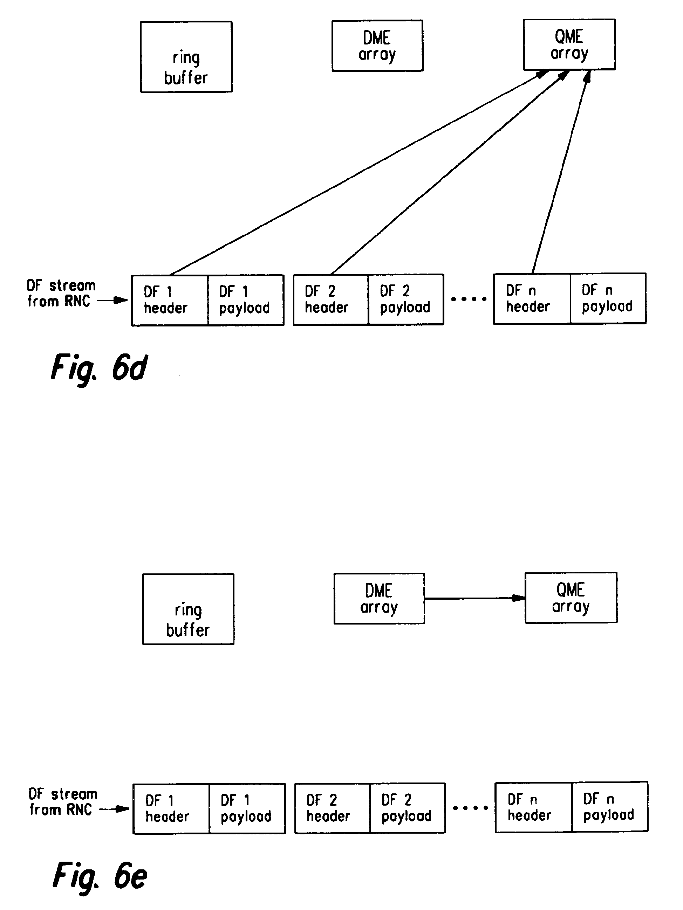

As shown in fig. 6d, for each payload the priority queue is selected, to which the data units are assigned to. The priority queue itself is assigned to a user equipment. If several channels are available for data transmission to the user equipment, the priority queue can also be assigned to a specific channel. To select the priority queue that is appropriate for the payload of a received data frame, information from the header of this data frame is used. This information can comprise e.g. the flow identifier. The priority queue itself is defined by an queue manage element QME. According to fig. 6a - 6f, all queue manage elements QME are stored e.g. in an array QME array.

As shown in fig. 6e, the data frame manage element DME of the current data frame is linked to the end of the selected priority queue. The priority queue can for example be realized as a ring list.

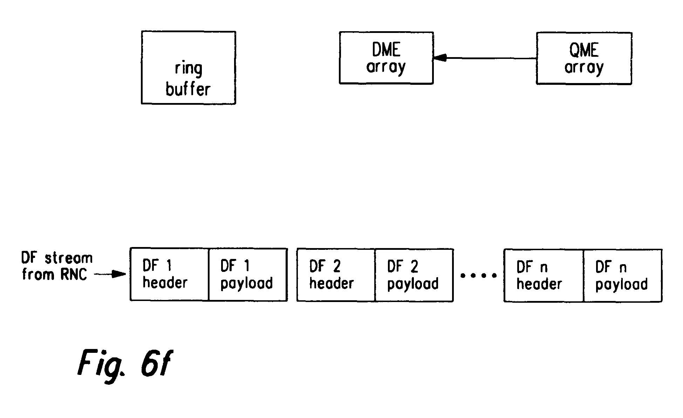

Furtheron, a life-time information is stored in the data frame manage element DME, as is schematically shown in fig. 6f.

Generally, before transmitting a data unit from the priority queue of the network device 2, e.g. the Node B, to the user equipment, several decisions have to be performed which need to access, e.g., the size of a data unit and the time of the reception. This requires a frequent access to the management information related to the data unit. To perform a high speed downlink to the user equipment 10, the access to the management information must be very fast.

According to the present invention, the management information is realised by the concept of data frame manage elements and is stored in the fast accessible second memory area 9. The data units themselves, that have to be accessed only once for transmitting the data units to the user equipment 10, are stored in the slower accessible first memory area 8.

The present invention exploits the fact that the time of reception and the size of the data units that are transmitted within the same data frame from the sender 3 to the network device 2 are the same for all data units within the payload of this data frame. So, this information has to be stored only once for each data frame. Therefore, a data frame manage element is generated.

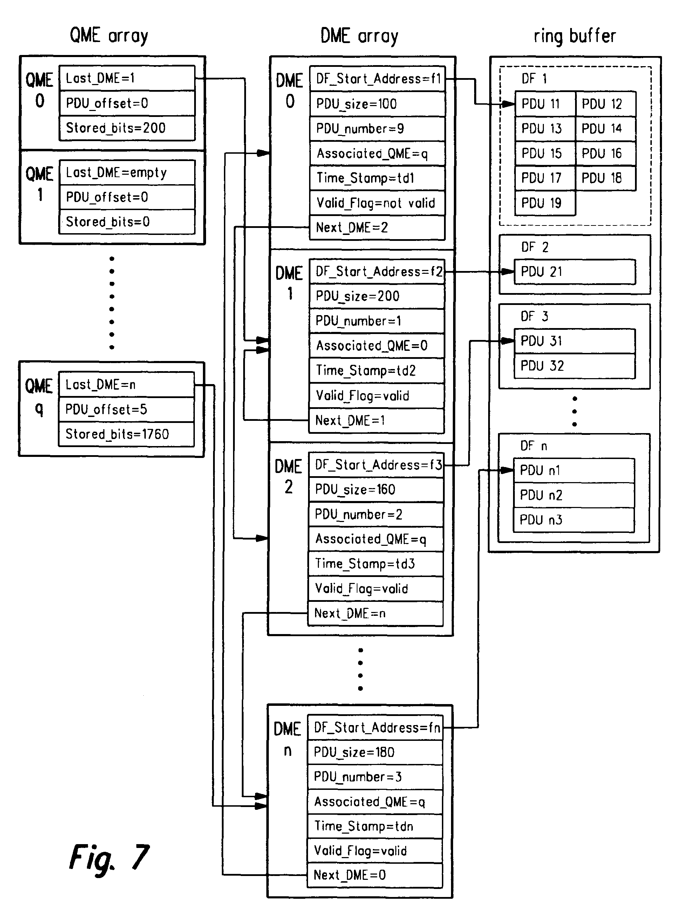

Several data frame manage elements DMEs are organised e.g. according to the data structure of an array. Fig. 7 shows an example of the layout of an array DME_array comprising several data frame manage elements DME 0, DME 1, DME 2, DME n. Each data frame manage element DME comprises several information and can be implemented as an abstract data type which allows to access each element of the data type directly.

As shown in fig. 7, each data frame manage element DME comprises an address information DF_Start_Address, a size information PDU_size, a number information PDU_number, a reference to a queue manage element Associated_QME, a lifetime information Time_Stamp, a validity information Valid_Flag, and a pointer Next_DME to the next data frame manage element DME.

The address information DF_Start_Address can be realised as a pointer to the address within the first memory element 8, where the first data unit that is assigned to the data frame manage element DME is stored. This can be e.g. a ring buffer. As shown in fig. 6a - 6f, this data unit is the first data unit within the payload of the data frame in which the data unit was transmitted from the network device 3, e.g. the RNC, to the network device 2, e.g. the Node B.

The size information PDU_size describes the number of bits that are used for each data unit. As shown in fig. 6c, this value is received by extracting this information out of the header of the data frame, when it is received by the network device 2. The combination of the address information DF_Start_Address of the first data unit and the size information PDU_size allows to directly access each data unit by multiplying the size information PDU_size with the number of data units that has to be accessed and then adding this value to the address information DF_Start_Address.

The number information PDU_number describes the total number of data units that were transmitted within the same data frame. Thus, the number information PDU_number also defines the number of data units the current data frame manage element DME is assigned to.

It is conceivable, that each data frame manage element DME also comprises an offset information (not in the figures). The offset information could define the number of data units that are already processed e.g. by already transmitting the data units to the user equipment 10. If no data unit the current data frame manage element DME is assigned to is already transmitted from the network device 2 to the user equipment 10, the offset information could be set to null.

However, according to the embodiment shown in fig. 7, the offset information is not stored within each data frame manage element DME, but only once for the whole set of data frame manage elements DME, i.e. only once within the QME array. In other words, the offset information is only stored once for the whole priority queue, since the contents of each priority queue is intrinsically defined by the set of data frame manage elements DME, which in turn are defined by the appropriate entry in the QME array. This embodiment is able to minimise the amount of storage that is needed for storing the data frame manage element DME. This embodiment can also increase the speed of processing, since updating the offset information whenever one or several data units from a priority queue are transmitted, only involves updating one offset information that is stored within the appropriate queue manage element QME, instead of updating each offset information for each data frame manage element DME.

The set of data frame manage elements DME that are assigned to the same priority queue is realised as a linked list of this data frame manage elements DME and denoted by DME array in the figures 6a - 6f and figure 7. Processing the data units that are stored within a priority queue, e.g. by transmitting the data units to another network device, e.g. the user equipment 10, is performed by subsequently reading the data frame manage elements DME that are stored in the corresponding linked list of data frame manage elements DME. If the data units to which a data frame manage element DME is assigned to are only transmitted partly, i.e. if not all of the data units are transmitted to the user equipment 10, then the number of data units that are already transmitted will be stored in the offset information PDU_offset of the appropriate queue manage element QME.

Since the set of data frame manage elements DME that define a priority queue is realized as a linked list of data frame manage elements DME, the globally stored offset information PDU_offset will always refer to the first data frame manage element DME within in the linked list that is not yet processed. This is, because if all data units a data frame element DME is assigned to are processed, then the data frame manage element DME will be deleted from the appropriate linked list. Thus, the next data frame manage element DME will get the first one within the linked list. The globally stored offset information PDU_offset then automatically refers to the data frame manage element DME that has to be processed next.

The validity information Valid_Flag indicates the validity of all data units the data frame manage element DME is assigned to. If the ring buffer is designed relatively small, it can happen that a greater number of data units are received by the network device 2 or the Node B than storage space within the ring buffer is available. This will cause an overwriting of already stored data units, according to the concept of the ring buffer. During generating a data frame manage element DME and storing this data frame manage element DME in the DME array, it is checked, whether the data units currently received overlap data units from previously received payloads. This check can be performed e.g. by calculating the address of the last data unit within a data frame and checking, whether the address information DF_Start_Adress of the currently generated data manage element DME is less than the value of the address information DF_Start_Address of the other data frame manage element DME.

If an overlap occurs, all data units within the payload of the previously generated data frame manage element DME will be marked as invalid. This is done by setting the validity information Valid_Flag of the previously stored data frame manage element DME to invalid. This implicitly marks all data units the previously stored data frame manage element DME is assigned to as invalid.

According to a predefined time interval, all data frame manage elements DME that are marked as invalid will be removed out of the DME array. Thus, the data units will also be deleted from the ring buffer, at least logically.

The lifetime information Time_Stamp describes the lifetime of all data units the data frame manage element DME is assigned to. The lifetime information Time_Stamp is generated as the sum of a current time, e.g. as provided by a special time counter, and the maximum data unit lifetime that is predefined according to each priority queue. This allows to determine, whether one or more data units stored in the ring buffer are out of date by just comparing a current time with the lifetime information Time_Stamp that is stored in the appropriate data frame manage element DME. This allows to check the lifetime of all data units a certain data frame manage element DME is assigned to by just evaluating one lifetime information Time_Stamp.

The pointer Next_DME to the next data frame manage element DME within the ring list allows to realize the ring list of all data frame manage elements DME that belong to the same priority queue. Since each ring list is assigned to a specific priority queue, each priority queue is implicitly defined by the ring list. For realising an anchor point into the priority queue, a specialised register Last_DME is used to define the last data frame manage element DME within the appropriate ring list. As shown in fig. 7, the register Last_DME is realised within the appropriate queue manage element QME.

Fig. 7 also shows the relation between the data units that are stored in the ring buffer (realized in the first memory area 8) and the ring list of data frame manage elements DME stored in the fast accessible second memory area 9 within the DME array.

The ring buffer comprises data units PDU11, PDU12, PDU13, PDU14, PDU15, PDU16, PDU17, PDU18, and PDU19 that are assigned to the data frame DF 1. The ring buffer further comprises data unit PDU21 that is assigned to the data frame DF 2. The ring buffer also comprises data units PDU31 and PDU32 that are assigned to the data frame DF 3. The ring buffer further comprises data units PDUn1, PDUn2, and PDUn3 that are assigned to the data frame DF n.

The set of data frame manage elements DME, i.e. the DME array, comprises the data frame manage elements DME 0, DME 1, DME 2 and DME n. Each of the data frame manage element DME 0 to DME n comprises the information as described above.

Each priority queue is accessible through a number of references starting at the appropriate queue manage element QME, that is stored in the QME array.

For example, to access the data units of the priority queue that is assigned to the queue manage element QME 0, the last data frame manage element DME that is assigned to the queue manage element QME 0 is determined. This is done by reading the value of the register Last_DME. According to the example shown in fig. 7, this is DME 1. In fig. 7, this relation is graphically indicated by an arrow connecting the register Last_DME with the data manage element DME 1 in the DME array. According to the concept of a ring list, the last element within each ring list points to the first element in the list. Thus, the pointer Next_DME in the last DME points to the first data frame manage element within the priority queue. In this example, the Next_DME of the data frame manage element DME 1 points to itself. This means, that only one data frame manage element DME 1 is assigned to the priority queue defined by the queue manage element QME 0.

The data units in this priority queue can be accessed via the pointer DF_Start_Address, which points to PDU21 in the ring buffer. From the pointer PDU_number it can be seen, that only one data unit is assigned to the data frame manage element DME 1. The size of this data unit is 200 bits, according to the value of the PDU_size. In the example shown in fig. 7, each data frame manage element DME comprises an entry for storing the number of bits of each data unit, PDU_size. Using the PDU_nmber and PDU_size values, each PDU within the ring buffer can be accessed individually, at least theoretically.

According to fig. 7, the priority queue that is assigned to the queue manage element QME 1 is empty. This can be learned by the entry Last_DME which points to a value representing 'empty'.

The priority queue that is assigned to the queue manage element QME q contains several data units, wherein the data units are assigned to several data frame manage elements DME. Starting at the QME array with the queue manage element QME q, the Last_DME points to DME n. This is the last data frame manage element DME in this priority queue. Since transmitting the data units of this priority queue to the appropriate user equipment 10 has to start with the first elements, the first data frame manage element DME has to be determined. This can be done by reading the value Next_DME, which points to the DME 0. However, the DME 0 is not valid, which is indicated by the Valid_Flag. Thus, the next data frame manage element DME in the priority queue has to be determined, by reading the value of Next_DME, which points to the data frame manage element DME 2.

Two data units, namely PDU31 and PDU32 are assigned to DME 2. PDU31 can be accessed by dissolving the reference DF_Start_Address. PDU32 can be accessed by adding the PDU_size to the DF_Start_Address.

Following the pointer Next_DME leads to DME n and thus to the data units PDUn1, PDUn2, and PDUn3.

If now the network device 2, e.g. the Node B, receives another data frame from the sender 3, e.g. from the RNC, a new data frame manage element DME n+1 (not shown in fig. 7) will be generated. Depending on the priority queue, the data units are assigned to, it can occur, that also a new queue manage element QME has to be generated. The data units will be extracted out of the payload of the data frame that is received by the network device 2, e.g. the Node B. If this payload holds more data units than storage space is left in the ring buffer, the new data units will be stored, but previously stored data units will be overwritten, due to the concept of a ring buffer. if these data units are not already transmitted to the user equipment 10, the overlapping will be detected by inspecting the storage location of the last data unit the new data frame manage element DME n+1 is assigned to and comparing this location to the location of the first data unit of all other data frame manage elements DME 1 to DME n. Then, the whole data frame manage element, the overwritten data unit is assigned to would be marked as invalid.

## Claims

1. A method for storing and processing a data unit (PDU) in a network device (2), wherein the network device (2) is connected to a communications network (1a; 1b), a management information (header) is assigned to the data unit (PDU), and the method comprises the steps of
- transmitting the data unit (PDU) to the network device (2),
- receiving the data unit (PDU) by the network device (2), and
- storing the data unit (PDU) in a first memory area (8),
**characterized in that** the method comprises the steps of
- generating a data frame manage element (DME) comprising the management information of the data unit (PDU);
- assigning the data unit (PDU) to the data frame manage element (DME);
- storing the data frame manage element (DME) in a second memory area (9).

2. The method of claim 1, **characterized in that** the second memory area (9) allows a faster access than the first memory area (8).

3. The method of claim 1 or 2, **characterized in that** more than one data units (PDU) are transmitted in the payload of at least one data frame (DF) to the network device (2) and the method comprising the steps of
- receiving the data frame (DF) by the network device (2) and extracting the data units (PDU);
- assigning at least two of the data units (PDU) to the same data frame manage element (DME).

4. The method of any one of the preceding claims, **characterized in that** the data frame manage element (DME) is assigned to a queue manage element (QME) comprising at least one data frame manage element (DME), wherein the queue manage element (QME) is assigned to a queue of data units.

5. The method of any one of the preceding claims, **characterized in that** for each data frame (DF) received by the network device (2) exactly one data frame manage element (DME) is generated and the data frame manage element (DME) is assigned to all data units (PDU) transmitted within the payload of the received data frame (PDU).

6. The method of any one of the preceding claims, **characterized in that** the data frame manage element (DME) comprises
- a size information (PDU_size) describing the length of each data unit (PDU) the data frame manage element (DME) is assigned to;
- an address information (DF_Start_Address) attached to the first data unit (PDU) in the pay load of the data frame (DF), wherein the address information (DF_Start_Address) enables to access the first data unit (PDU) when stored in the first memory area (8);
- a lifetime information (Time_Stamp); and/or
- a number information (PDU_number) describing the total number of data units (PDU) the data frame manage element (DME) is assigned to.

7. The method of claim 6, **characterized in that** the lifetime information (Time_Stamp) will be stored as the sum of a numerical representation of a current time and a numerical representation of a maximum lifetime.

8. The method of any one of claim 4 to 7, **characterized in that** the queue is organized as a priority queue.

9. The method of claim 8, **characterized in that** the method comprises the steps of
- checking for each data frame manage element (DME) that is stored in the second memory area (9), whether at least one data unit (PDU) the data frame manage element (DME) is assigned to overlaps with a data unit (PDU) that is already stored within the same priority queue; and
- if an overlap occurs, declaring the data frame manage element (DME) previously stored as invalid.

10. The method of claim 9, **characterized in that** the data frame manage element (DME) comprises a validity information (Valid_Flag) and that the validity information (Valid_Flag) is set to invalid if the data frame manage element (DME) is declared as invalid.

11. The method of claim 10, **characterized in that**
- according to a predefined time-interval it is checked, whether the validity information (Valid_Flag) of the data frame manage element (DME) is set to invalid; and
- the data frame manage element (DME) is removed from the set of data frame manage elements (DME array), if the data frame manage element (DME) is set to invalid.

12. The method according to any one of the preceding claims, **characterized in that** the network device (2) causes the data units (PDU) to be transmitted to a user equipment (10) and that the data frame manage element (DME) and/or the queue manage element (QME) comprises an offset information (PDU_offset) indicating the number of data units (PDU) that are already transmitted.

13. Communications network (1a; 1b) comprising a network device (2) and means for transmitting a data unit (PDU) to the network device (2), wherein the network device (2) comprises a first memory area (8), means for receiving the data unit (PDU), and means for storing the data unit (PDU) in the first memory area (8), **characterized in that** the communications network comprises means for executing a method according to any one of the claims 1 through 12.

14. Communications network (1a; 1b) according to claim 13, **characterized in that** the communications network (1a; 1b) comprises a cellular network (4b).

15. Communications network of claim 14, **characterized in that** the cellular network (4b) is an UMTS network and the network device (2) is realized as a Node B.

16. Network device (2) that can be connected to a communications network (1a; 1b), wherein the network device (2) comprises a first memory area (8), means for receiving a data unit (PDU), and means for storing the data unit (PDU) in the first memory area (8), **characterized in that** the network device (2) comprises means for executing a method according to any one of the claims 1 through 12.

17. Network device (2) according to claim 16, **characterized in that** the communications network (1a; 1b) is realized as an UMTS-network and that the network device (2) is a Node B that receives at least one data frame (DF) from an RNC and transmits at least one data unit (PDU) to at least one user equipment (10) via a radio link (11).

18. Computer program adapted to be run on a data processing unit, in particular on a network device (2), **characterized in that** the computer program is programmed to perform a method according to any one of the claims 1 to 12, if the computer program is run on the data processing unit.

19. Computer program of claim 18, **characterized in that** the computer program is stored on a storage device, in particular a random access memory (RAM), a read only memory (ROM), a flash memory, compact disc (CD), a digital versatile disc (DVD) or a hard disc.
